# EUROPÄISCHE PATENTSCHRIFT

(11) **EP 1 646 761 B1**
(45) Veröffentlichungstag und Bekanntmachung des Hinweises auf die Patenterteilung: **05.03.2008**
(21) Anmeldenummer: 05700716.3
(22) Anmeldetag: 07.01.2005
(51) Int. Cl.: E05C 17/52, E05F 5/08, A47B 88/04

(54) **DÄMPFUNGSVORRICHTUNG ZUM ABBREMSEN VON BEWEGLICHEN MASSEN, Z. B. MÖBELSCHUBLADEN, MÖBELTÜREN, MÖBELKLAPPEN ODER DERGLEICHEN**
DAMPING DEVICE FOR BRAKING MOBILE MASSES, E.G. DRAWERS, DOORS, FLAPS AND THE LIKE
DISPOSITIF D'AMORTISSEMENT SERVANT A REDUIRE LA VITESSE DE MASSES MOBILES, PAR EX. DE TIROIRS DE MEUBLE, PORTES DE MEUBLE, ABATTANTS DE MEUBLE OU ANALOGUE

(30) Priorität: 06.02.2004 DE 202004001794 U
(43) Veröffentlichungstag der Anmeldung: 19.04.2006
(73) Patentinhaber: ACE STOSSDÄMPFER Gmbh, D-40764 Langenfeld (DE)
(72) Erfinder: FERKANY, Michael, A., White Lake, MI 48386 (US)
(74) Vertreter: Beyer, Rudi
(86) Internationale Anmeldenummer: PCT/EP2005/000056
(87) Internationale Veröffentlichungsnummer: WO 2005/075771

(56) Entgegenhaltungen:
- AU-B2- 611 895
- DE-U1- 8 907 841
- DE-U1- 9 402 004

## Beschreibung

### Gattung

Die Erfindung betrifft eine Dämpfungsvorrichtung zum Abbremsen von beweglichen Massen, z. B. Möbelschubladen, Möbeltüren, Möbelklappen oder dergleichen.

### Stand der Technik

Beispielsweise sollen Möbelschubladen beim Einschieben am Hubende einerseits nicht hart anschlagen, andererseits aber auch nicht aus der Endposition zurückfedern oder zurückfahren. Vielmehr wird angestrebt, dass sie in der Endposition mit einer kleinen Haltekraft gegen selbsttätiges Öffnen durch zum Beispiel Schwingungen festgehalten werden.

Aus der JP 2001-355666 (P2001-355666A) ist eine Dämpfungsvorrichtung vorbekannt, die allerdings eine relativ große Anzahl von Einzelteilen aufweist, wodurch sich relativ hohe Fertigungs- und Montagekosten ergeben. Außerdem weist die Dämpfungsvorrichtung eine ziemlich hohe Bauform auf, bedingt durch die große Anzahl übereinander angeordneter Einzelteile. Dieser Raum steht jedoch oftmals an beweglichen Möbelteilen wie Schubladen, Klappen, Laden oder Schranktüren nicht zur Verfügung. Hier vorzusehende Dämpfungsvorrichtungen dürfen nur wenig Platz in Anspruch nehmen und minimale Kosten verursachen. Wegen der Verschmutzungsgefahr soll außerdem keine Raumluft wie fettige Kochdämpfe und kein Fluid als Dämpfungsmittel in Dämpfungsvorrichtungen zum Einsatz kommen. Dies verbietet sich insbesondere für Möbel, die im Lebensmittelbereich eingesetzt werden.

Die EP 1 221 559 A2 beschreibt eine Brems- und Dämpfungsvorrichtung für bewegliche Möbelteile, die gleichfalls eine große Anzahl verschiedener Bauteile aufweist, die allesamt bearbeitet werden müssen. Die großen Außenabmessungen, die durch die kreisrunde Bauform bedingt sind, verringern die Einsatzmöglichkeiten derartiger Dämpfungsvorrichtungen. Die Verwendung von Raumluft verursacht außerdem weitere Nachteile, die insbesondere bei fettigen Kochdämpfen zu baldiger Verschmutzung beweglicher Einzelteile und damit zu einem Unbrauchbarmachen führen können. Nachteilig ist außerdem, dass eine Rückstellkraft aufgrund einer Rückstellfeder beim Erreichen der Endposition beweglicher Möbelteile besteht, so dass zum Beispiel Schubladen aus einem Korpus eines Schreibtisches oder dergleichen herausfedern können. Des weiteren wird in der Endlage beweglicher Möbelteile wie Schubladen oder dergleichen keine Haltekraft erzeugt, so dass eine separate Haltevorrichtung benötigt wird, was weitere Kosten verursacht.

Aus der EP 1 241 374 A1 und der DE 202 16 262 U1 sind jeweils Dämpfungsvorrichtungen vorbekannt, welche ebenfalls die vorbeschriebenen Nachteile aufweisen. Darüber hinaus wird ein Fluid statt Raumluft zur Dämpfung benötigt. Dieses Fluid wird mit einer elastischen Dichtung gegen Leckage-Verluste abgedichtet.

Die US 6 578 832 B2 zeigt ebenfalls eine Dämpfungsvorrichtung für ein Handschuhfach in Automobilen, bei welchem folgende Nachteile gegeben sind: Die Vorrichtung baut ebenfalls relativ groß. Es wird darüber hinaus Raumluft zum Dämpfungsvorgang benötigt. In der Endlage wird keine Haltekraft erzeugt.

Die JP 2002 242978 (P2002-242978A) beschreibt und zeigt ebenfalls eine Dämpfungsvorrichtung für Möbelteile, wobei zur Dämpfung ein Rotationsdämpfer eingesetzt wird, dessen drehbares Zahnritzel mit Zähnen einer Zahnstange kämmt. Der Rotationsdämpfer ist mit einem Fluid gefüllt. Die Zähne der Zahnstange oder des Zahnritzels können beim schnellen Einschieben brechen. Ein Rotationsdämpfer mit Fluid und Dichtung ist außerdem verhältnismäßig teuer.

Die DE 201 07 426 U1 beschreibt und zeigt eine Dämpfungsvorrichtung für Möbelteile, welche bei zylindrischer Bauweise relativ viel Platz benötigt. Zum Dämpfen wird Raumluft oder ein Fluid benötigt, wodurch sich die oben bereits geschilderten Nachteile ergeben. Am Hubende wird eine Rückstellkraft erzeugt, so dass zum Beispiel eine Schublade aus dem Korpus um ein gewisses Maß nach dem Einschieben wieder herausbewegt werden kann. Das bedeutet also, dass am Hubende keine Haltkraft wirksam wird. Deshalb ist eine besondere Haltevorrichtung erforderlich, wodurch die Kosten vergrößert werden.

Die DE 203 02 120 U1 und die DE 203 02 121 U1 beschreiben einen Flüssigkeitsdämpfer, insbesondere für bewegbare Möbelteile, mit einem Zylinder, einem im Zylinder linear verfahrbaren Kolben mit Kolbenstange, und mit einem elastischen Verdrängungselement, wobei das Verdrängungselement als geschlitzter Mantel, der die Kolbenstange umgibt, ausgeführt ist. Die Dämpfungsvorrichtung besitzt viele Einzelteile, wodurch die Kosten erhöht werden, ganz abgesehen von den relativ großen Querabmessungen bedingt durch die zylindrische Bauform. Es wird außerdem am Hubende keine Haltekraft erzeugt, so dass die abzubremsende Masse, zum Beispiel eine Schublade, zurückfedern kann.

Aus der DE 102 54 375 C1 ist eine Dämpfungsvorrichtung zum Dämpfen der Schwenkbewegung in einem durch zwei Endlagen begrenzten Schwenkbereich eines relativ zu einem ortsfesten Möbelstückteil schwenkbar gelagerten Möbelstückteils vorbekannt, mittels eines Dämpfungselementes, wobei das Dämpfungselement eine Zylinder-Kolben-Einheit umfasst. Dazu ist an dem die Zylinder-Kolben-Einheit nicht tragenden Möbelstückteilen mindestens ein Betätigungselement angeordnet, das bei aktivierter Dämpfung mit der Zylinder-Kolben-Einheit ein Schiebekeilgetriebe bildend gekoppelt ist. Außerdem sind sowohl das Betätigungselement als auch die Zylinder-Kolben-Einheit Teile eines Gelenkes. Auch diese Vorrichtung weist zahlreiche Einzelteile auf.

Die JP 2002349622 zeigt ebenfalls einen im Querschnitt kreisrundförmigen Dämpfer, der relativ groß baut und zahlreiche Einzelteile aufweist mit den vorstehend beschriebenen Nachteilen.

Die DE 203 11 217 U1 beschreibt einen Luftdämpfer mit einem Zylindergehäuse in dem ein endseitig an einer Kolbenstange befindlicher Kolben zwischen einem den Zylinderkörper verschließenden Deckel und einem Bodenteil gleitend geführt ist, wobei durch den, ein wandungsseitig anliegendes Dichtelement aufweisender Kolben eine im Zylinderraum befindliche Luft komprimiert wird und damit die in Einschubrichtung zum Bodenteil hin bewegte Kolbenstange eine Dämpfung erfährt, wobei der Kolben in einer Nut einen einseitig wirkenden Dichtungsring sowie einen in Zwei-Komponenten-Spritzverfahren eingebrachten, durch die komprimierte Luft aufwölbbaren Bremskörper enthält, der an der Zylinderwand eine zusätzliche Reibbremswirkung entfaltet. Auch hier wird wieder ein Fluid benötigt, und es sind zahlreiche Einzelteile notwendig, die bearbeitet werden müssen, ganz abgesehen von den relativ großen Querabmessungen, die oftmals einen Einbau unter beengten Raumverhältnissen am Möbel nicht erlaubt.

Die DE 89 07 841 U1 zeigt in Fig. 7 eine im einleitenden Teil des Anspruchs 1 offenbarte Dämpfungsvorrichtung.

### Aufgabe

Der Erfindung liegt die Aufgabe zugrunde, eine Dämpfungsvorrichtung zum Abbremsen von beweglichen Massen, zum Beispiel Möbelschubladen, Möbeltüren, Möbelklappen oder dergleichen, zu schaffen, die bei konstruktiv einfachster Ausfertigung mit wenigen Einzelteilen auskommt und in der Endstellung des bewegten Möbels ohne zusätzliche Haltevorrichtung eine gewisse Haltekraft auf die bewegliche Masse ausübt, so dass sie sich nicht zurückbewegen oder zurückfedern kann.

### Lösung

Die Aufgabe wird durch die in **Patentanspruch 1** wiedergegebenen Merkmale gelöst.

### Einige Vorteile

Die Erfindung betrifft eine Dämpfungsvorrichtung, welche äußerst einfach aufgebaut, preisgünstig herzustellen ist und wegen ihrer sehr flachen Bauform nur wenig Platz benötigt, so dass sie auch zwischen Schublade und Möbelkorpus anzuordnen ist, ohne dass die herkömmlichen Abmessungen des Möbels zu verändern wären. In der Endstellung wird auf das bewegliche Möbelteil, zum Beispiel eine Schublade, keine Rückstellkraft ausgeübt. Vielmehr entsteht am Ende des Dämpfungsweges eine geringe Haltekraft durch Kraftschluss. Für den Dämpfungsvorgang selbst wird weder Raumluft noch ein Dämpfungsfluid benötigt, so dass sich die Dämpfungsvorrichtungen der erfindungsgemäßen Art auch im Lebensmittelbereich einsetzen lassen. Dämpfungsvorrichtungen der erfindungsgemäßen Art werden demgemäss auch nicht durch die Raumluft verschmutzt und können dadurch auch nicht ihre Funktion verlieren.

Bei der Erfindung wird im Prinzip lediglich ein Gehäuse und ein flaches aus einem gummielastische Eigenschaften aufweisenden Polymer bestehendes Element, das als Rollfeder ausgebildet sein kann, benötigt, das durch die Dämpfungszunge beim Einfahren in das Dämpfungsgehäuse, also beim Bremsvorgang, verformt bzw. abgewickelt wird. Dabei entsteht proportional zum Bremshub eine ansteigende Dämpfungskraft, die am Hubende gegen Null abfallen kann. Bedingt durch das federnde Rückstellvermögen des Dämpfungselementes und ggf. auch deren Dicke und dem zwischen Dämpfungsgehäuse einerseits und der Dämpfungszunge andererseits vorhandenen Spiel entsteht eine Haltekraft durch Kraftschluss zwischen Dämpfungszunge einerseits und Dämpfungselement sowie dem Dämpfungsgehäuse andererseits, so dass am Hubende eine gewisse Haltekraft auf das bewegliche Möbelteil, zum Beispiel eine Schublade, eine Klappe oder Lad, wirksam wird. Zum Zurückbewegen der beweglichen Masse, zum Beispiel einer Schublade, rollt sich dann das Dämpfungselement, das somit einen Memory-Effekt besitzt, wieder in seine Ursprungslage auf und steht beim erneuten Bremsvorgang wiederum zur Verfügung. Im Prinzip werden also nur drei Teile, nämlich die Dämpfungszunge, das Dämpfungsgehäuse und das Dämpfungselement in Form einer Zunge oder einer Art Rollfeder, benötigt, so dass sich eine sehr einfache, aus wenigen Einzelteilen bestehende, robuste Konstruktion ergibt.

### Weitere erfinderische Ausgestaltungen

Weitere erfinderische Ausgestaltungen sind in den **Patentansprüchen 2** bis **17** beschrieben.

Die Dämpfungsvorrichtung nach **Patentanspruch 2** beschreibt eine bevorzugte Ausführungsform der Erfindung. Bei dieser liegt die Dämpfungszunge an dem aufrollbaren oder gestreckten Dämpfungskörper kraftschlüssig an.

Wird eine Ausführungsform nach **Patentanspruch 3** gewählt, so ergibt sich eine besonders günstige Lösung, die ohne jegliche Arretiermittel in der Endstellung auskommt.

Die Dämpfungsvorrichtung nach **Patentanspruch 4** ergibt eine geringe Querabmessung und damit geringe Bauhöhe. Eine solche Dämpfungsvorrichtung lässt sich auch an vorhandenen Möbeln, zum Beispiel im Spalt zwischen einer Schublade und dem Korpus eines Schreibtisches noch nachträglich anordnen.

In den **Patentansprüchen 5** und **6** sind weitere vorteilhafte Ausführungsformen einer erfindungsgemäßen Dämpfungsvorrichtung beschrieben.

Bei der Lösung nach **Patentanspruch 7** ist der Dämpfungskörper im Querschnitt rechteckförmig mit abgerundeten Ecken ausgebildet. Dadurch wird die Kerbempfindlichkeit herabgesetzt, was sich besonders günstig bei einem aus Kunststoff bestehenden Dämpfungselement auswirkt.

Bei der Ausführungsform nach **Patentanspruch 8** legt sich der Dämpfungskörper beim Streckvorgang, also besonders in der kritischen Endstellung, die eine bewegliche Masse, zum Beispiel Schublade erreichen kann, außerdem kraftschlüssig an der Innenwandung des Dämpfungsgehäuses an, so dass nicht nur zwischen Dämpfungszunge und Dämpfungskörper, sondern auch zwischen Dämpfungskörper und Dämpfungsgehäuse Kraftschluss gegeben ist.

Die **Patentansprüche 9** bis **11** beschreiben weitere vorteilhafte Alternativlösungen, was auch für **Patentanspruch 12** gilt.

Bei der Ausführungsform nach **Patentanspruch 13** ergibt sich ein schonendes Anfahren des vorderen Endes der Dämpfungszunge an dem Dämpfungskörper.

Gemäß **Patentanspruch 14** ist der Dämpfungskörper mit einem Endabschnitt mit der Innenwand des Dämpfungsgehäuses durch Kleben verbunden, während dies bei der Lösung nach **Patentanspruch 15** durch Schrauben oder Nieten geschieht.

Eine einfache Befestigungsmöglichkeit des Dämpfungskörpers am Dämpfungsgehäuse beschreibt **Patentanspruch 16**.

Eine bevorzugte Ausführungsform ist in **Patentanspruch 17** definiert.

In der Zeichnung ist die Erfindung - teils schematisch - beispielsweise veranschaulicht. Es zeigen:
- Fig. 1: eine Schublade mit erfindungsgemäß ausgebildeten Dämpfungsvorrichtungen, in perspektivischer Darstellung;

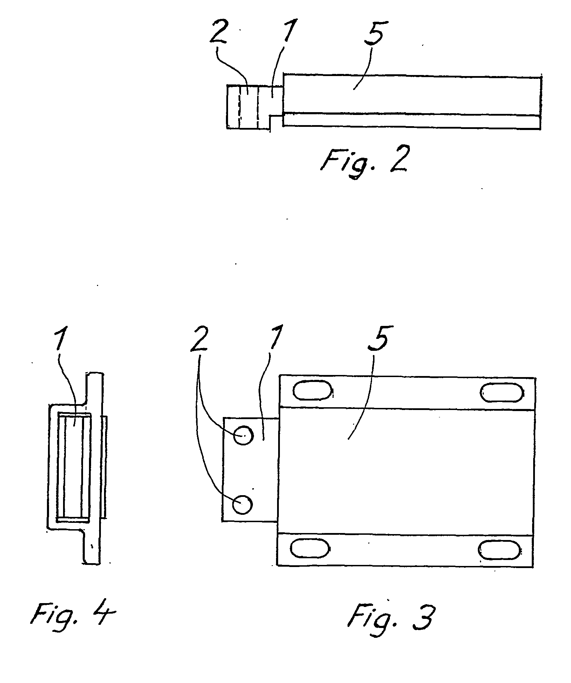

- Fig. 2: eine Dämpfungsvorrichtung in der Ansicht mit in das Dämpfungsgehäuse eingeschobener Dämpfungszunge, ohne Möbel;
- Fig. 3: eine Draufsicht zu Fig. 2;
- Fig. 4: eine Stirnansicht zur Fig. 3;
- Fig. 5: eine Dämpfungszunge in der Ansicht;
- Fig. 6: einen Längsschnitt durch ein Dämpfungsgehäuse mit darin angeordnetem Dämpfungskörper in einer ersten Ausführungsform;
- Fig. 7: einen Längsschnitt durch eine Dämpfungsvorrichtung gemäß der Erfindung mit in das Dämpfungsgehäuse eingeschobener Dämpfungszunge, teils in der Ansicht;
- Fig. 8: einen Längsschnitt durch ein Dämpfungsgehäuse mit als Rollfeder ausgebildetem Dämpfungskörper bei einer weiteren Ausführungsform, teils im Längsschnitt;
- Fig. 9: eine zu Fig. 8 passende Dämpfungszunge und
- Fig. 10: die aus den Fig. 8 und 9 ersichtliche Dämpfungsvorrichtung bei in das Dämpfungsgehäuse eingeschobener Dämpfungszunge, teils im Längsschnitt, teils in der Ansicht.

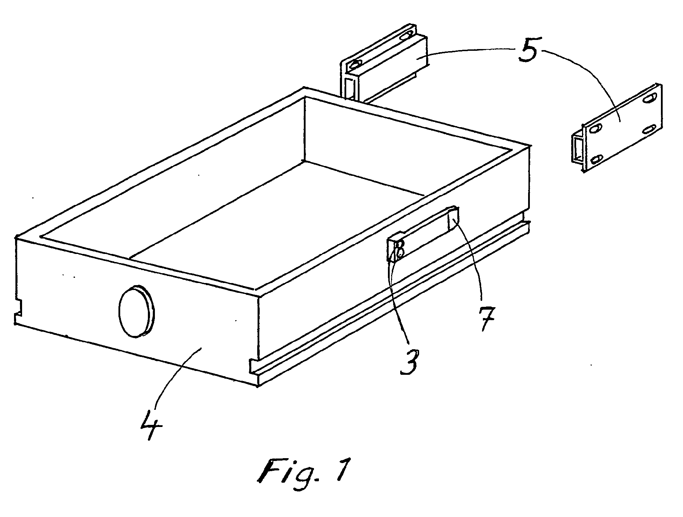

Mit dem Bezugszeichen 1 ist eine Dämpfungszunge bezeichnet, die im Querschnitt rechteckförmig oder quadratisch, aber auch polygonförmig, oder aber im Bedarfsfalle auch kreisrund, ausgebildet sein kann, bevorzugt aber flach zu gestalten ist, wie dies in der Zeichnung dargestellt ist, in der die Dämpfungszunge 1 in einem zu ihrer Längsachse orthogonal geführten Querschnitt rechteckförmig und damit blechförmig flach, ausgebildet ist. Die Dämpfungszunge 1 weist eine oder mehrere Befestigungsbohrungen 2 auf, durch die Befestigungselemente, z. B. Schrauben 3, hindurchgreifen können, um die Dämpfungszunge 1 an eine bewegliche Masse eines Möbels, zum Beispiel an einer Schublade 4, zu befestigen. In Fig. 1 ist die Dämpfungszunge 1 durch zwei Befestigungselemente 3, z. B. durch Schrauben, Niete, Stifte, Splinte, oder dergleichen an einer Seitenwand der Schublade 4 befestigt. Auf der gegenüberliegenden Seite der Schublade 4 kann eine form- und abmessungsmäßig gleiche Dämpfungszunge 1 angeordnet sein, um beim Abbremsvorgang ein gleichmäßiges, drehmomentfreies Abbremsen der beweglichen Masse 4 zu ermöglichen.

Wie man aus der Zeichnung erkennt, ist die Dämpfungszunge 1 bei der in der Zeichnung dargestellten Ausführungsform im Querschnitt rechteckförmig gestaltet und sehr flach ausgebildet, so dass sie sich ohne Veränderung der üblichen Bauabmessungen im Spalt zwischen dem Korpus eines Möbels, z. B. einem Schreibtisch, und zwischen der beweglichen Masse 4, vorliegend eine Schublade, unterbringen lässt.

Jeder Dämpfungszunge 1 ist ein hülsenförmiges, längliches Dämpfungsgehäuse 5 zugeordnet, das einen Dämpfungsraum 6 aufweist, in den die jeweilige Dämpfungszunge 1 passend, aber mit Spiel, eingreifen kann.

Die Dämpfungszunge 1 ist an ihrem vorderen, dem Dämpfungsgehäuse 5 zugekehrten Endabschnitt, bei 7, sich in Einschubrichtung verjüngend ausgebildet.

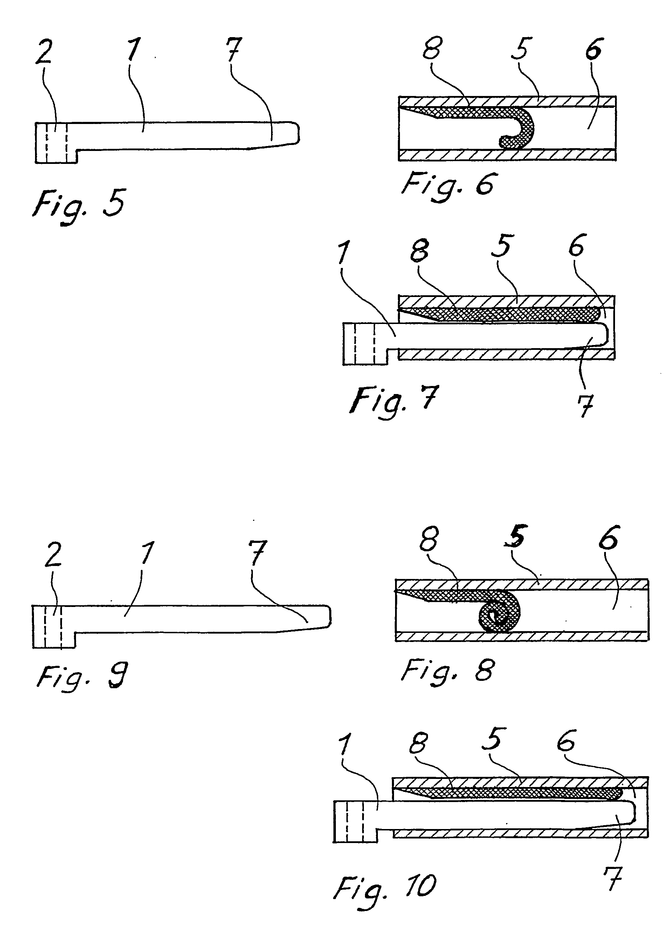

In dem Dämpfungsgehäuse 5 ist ein Dämpfungselement 8 angeordnet, das vorliegend bei allen Ausführungsformen aus einem etwa gummiartige, federelastische Eigenschaften aufweisenden Polymer-Kunststoff, z. B. aus Polyurethan oder Polyester-Elastomer, besteht. Das verwendete Dämpfungselement 8 besitzt Memory-Effekt, kehrt also nach einem Dämpfungsvorgang und nach einem Herausziehen der Dämpfungszunge 1 aus dem Dämpfungsgehäuse 5 wieder in seine Ausgangslage zurück. Diese Ausgangslage ist bei der Ausführungsform nach Fig. 5 bis 7 in Fig. 6 dargestellt, bei welchem der Dämpfungskörper 8 einen Längenabschnitt aufweist, mit dem er an der Innenseite des Dämpfungsgehäuses 5 satt anliegt und hier zum Beispiel durch Kleben, Schrauben oder dergleichen, fest verbunden ist, während sein Ende kreisförmig in Richtung auf die Zunge sich erstreckend geformt ist. Beim Eindringen der Dämpfungszunge 1 wird dieser kreisförmige Längenabschnitt gestreckt und befindet sich dann in dem Raum zwischen dem Dämpfungsgehäuse 5 und der Dämpfungszunge 1 und hält dadurch die mit der Dämpfungszunge 1 befindliche bewegliche Masse 4 durch Kraftschluss in der Endstellung, so dass die bewegliche Masse 4, zum Beispiel eine Schublade, auch bei einem heftigen Einschieben nicht ohne weiteres in Offenstellung wieder zurückfedern oder sich zurückbewegen kann. Statt eines - wie in Fig. 6 dargestellt - etwa halbkreisförmigen Endabschnittes kann der Dämpfungskörper 8 auch hier mehrere Windungen aufweisen, wie dies bei der Ausführungsform nach den Fig. 9 bis 10 dargestellt ist. Auch hierbei ist wiederum ein Längenabschnitt satt an der Innenwandung des Dämpfungsgehäuses 5 anliegend mit dieser fest, z. B. durch Kleben oder Schrauben, verbunden. Beim Eintritt der Zunge 1 wird dieser aufgerollte Abschnitt in die aus Fig. 10 ersichtliche, gestreckte Lage verformt, rollt sich aber wieder beim Herausziehen der Dämpfungszunge 1 in seine aus Fig. 8 ersichtliche Ausgangslage zurück (Memory-Effekt).

Statt durch Kleben kann ein Abschnitt des Dämpfungskörpers 8 auch in einer Aussparung oder durch eine Öffnung des Dämpfungsgehäuses 5 nach außen herausgeführt und hier am Dämpfungsgehäuse 5 fest, aber lösbar, zum Beispiel durch Kleben oder Schrauben, verbunden werden.

Des weiteren ist es denkbar, in dem aus Kunststoff bestehenden Dämpfungskörper 8 eine Einlage aus einem federelastische Eigenschaften aufweisenden anderen Körper, zum Beispiel aus Stahl, oder einem anderen Kunststoff, anzuordnen, der von dem Kunststoff vollständig ummantelt wird und der ebenso federelastisch ist wie der Kunststoffkörper selbst.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Dämpfungszunge
- 2: Befestigungsbohrung
- 3: Befestigungselement, Schraube, Splint, Zapfen
- 4: Möbel, bewegliche Masse, Schublade
- 5: Dämpfungsgehäuse
- 6: Dämpfungsraum
- 7: Endabschnitt der Dämpfungszunge 1, verjüngter
- 8: Dämpfungselement, Rollfeder, Rollelement

### Literaturverzeichnis

DE 102 54 375 C1
DE 89 07 841 U1
DE 201 07 426 U1
DE 202 16 262 U1
DE 203 02 120 U1
DE 203 02 121 U1
DE 203 1 1 217 U1

JP 2001 - 355666 (P2001-355666A)
JP 2002 - 242978 (P2002-242978A)
JP 2002 - 349622 A

EP 1 221 559 A2
EP 1 241 374 A1

US 6,578,832 B2

## Patentansprüche

1. Dämpfungsvorrichtung zum Abbremsen von beweglichen Massen (4), z. B. Möbelschubladen, Möbeltüren, Möbelklappen, oder dergleichen, mit einem länglichen, hülsen- oder rohrförmigen Dämpfungsgehäuse (5), einem in dem Dämpfungsgehäuse (5) angeordneten aus einem Werkstoff mit federndem Rückstellvermögen bestehenden Dämpfungselement (8), einer in das Dämpfungsgehäuse (5) hinein- und herausbeweglichen Dämpfungszunge (1), die beim Eintauchen in das Dämpfungsgehäuse (5) gegen das Dämpfungselement (8) einwirkt, **dadurch gekennzeichnet, dass** die Dämpfungseuge (1) beim Eintauchen in das Dämfungsgenäuse (5) das nach Art einer Spiralfeder aufgewickelten Dämpfungselement (8) ganz oder teilweise aufrollt und dabei federelastisch streckt.

2. Dämpfungsvorrichtung nach Anspruch 1, **dadurch gekennzeichnet, dass** die Dämpfungszunge (1) an dem aufrollbaren oder gestreckten Dämpfungselement (8) kraftschlüssig anliegt.

3. Dämpfungsvorrichtung nach Anspruch 2, **dadurch gekennzeichnet, dass** der Kraftschluss zwischen Dämpfungszunge (1) und Dämpfungselement (8) eine Haltekraft auf die bewegliche Masse (4) in der jeweiligen Stellung, insbesondere in der Bremsendstellung, ausübt.

4. Dämpfungsvorrichtung nach Anspruch 1 oder einem der darauffolgenden Ansprüche, **dadurch gekennzeichnet, dass** das Dämpfungselement (8) im Querschnitt nach Art eines flachen Bandes ausgebildet ist.

5. Dämpfungsvorrichtung nach den Ansprüchen 1 bis 3, **dadurch gekennzeichnet, dass** das Dämpfungselement (8) im Querschnitt kreisrund ausgebildet ist.

6. Dämpfungsvorrichtung nach den Ansprüchen 1 bis 3, **dadurch gekennzeichnet, dass** das Dämpfungselement (8) im Querschnitt polygonförmig ausgebildet ist.

7. Dämpfungsvorrichtung nach den Ansprüchen 1 bis 3, **dadurch gekennzeichnet, dass** das Dämpfungselement (8) im Querschnitt rechteckförmig mit abgerundeten Ecken ausgestaltet ist.

8. Dämpfungsvorrichtung nach Anspruch 1 oder einem der darauffolgenden Ansprüche, **dadurch gekennzeichnet, dass** das Dämpfungselement (8) sich beim Streckvorgang formschlüssig an die zugekehrte Innenwand des Dämpfungsgehäuses (5) anlegt.

9. Dämpfungsvorrichtung nach Anspruch 1 oder einem der darauffolgenden Ansprüche, **dadurch gekennzeichnet, dass** das Dämpfungselement (8) aus einem federelastische Eigenschaften aufweisenden Polymer, vorzugsweise einem Polyurethan-Kunststoff oder einem Polyester-Elastomer-Kunststoff, besteht.

10. Dämpfungsvorrichtung nach Anspruch 1 oder einem der darauffolgenden Ansprüche, **dadurch gekennzeichnet, dass** das Dämpfungselement (8) aus einem alterungsbeständigen, ozonbeständigen und lichtechten Kunststoff, besteht, der auch gegen die üblicherweise vorkommenden Öle und Fette resistent ist.

11. Dämpfungsvorrichtung nach Anspruch 1 oder einem der darauffolgenden Ansprüche, **dadurch gekennzeichnet, dass** das Dämpfungselement (8) aus einem Werkstoff mit Memory-Effekt besteht.

12. Dämpfungsvorrichtung nach Anspruch 1 oder einem der darauffolgenden Ansprüche, **dadurch gekennzeichnet, dass** nach dem Abbremsen der Masse in der Endstellung des Dämpfungsvorganges das Dämpfungselement (8) durch die Dämpfungszunge (1) vollkommen gestreckt ist und zwischen der Dämpfungszunge (1) und der Innenwand des Dämpfungsgehäuses (5) ausgestreckt angeordnet ist und beim Herausziehen der Dämpfungszunge (1) aus dem Dämpfungsgehäuse (5) sich selbsttätig in seine spiralförmige Gestalt federelastisch aufwickelt.

13. Dämpfungsvorrichtung nach Anspruch 1 oder einem der darauffolgenden Ansprüche, **dadurch gekennzeichnet, dass** die Dämpfungszunge (1) an ihrem in das Dämpfungsgehäuse (5) eintauchenden Ende (7) sich nach vorne hin konisch verjüngt und an der vorderen Stirnseite abgerundet ausgebildet ist.

14. Dämpfungsvorrichtung nach Anspruch 1 oder einem der darauffolgenden Ansprüche, **dadurch gekennzeichnet, dass** das Dämpfungselement (8) mit einem Endabschnitt mit der Innenwand des Gehäuses (5) durch Kleben verbunden ist.

15. Dämpfungsvorrichtung nach Anspruch 1 oder einem der Ansprüche 2 bis 13, **dadurch gekennzeichnet, dass** das Dämpfungselement (8) mit einem Endabschnitt durch Schrauben oder Nieten verbunden ist.

16. Dämpfungsvorrichtung nach Anspruch 1 oder einem der Ansprüche 2 bis 13, **dadurch gekennzeichnet, dass** das Dämpfungselement (8) mit einem Endabschnitt in einer Aussparung oder Durchbrechung des Dämpfungsgehäuses (5) angeordnet und befestigt ist.

17. Dämpfungsvorrichtung nach Anspruch 1 oder einem der darauffolgenden Ansprüche, **dadurch gekennzeichnet, dass** das Dämpfungsgehäuse (5) an einer Wand eines Möbels (4) befestigt ist, während sich die Dämpfungszunge (1) an der beweglichen Masse (4), z. B. an der Seitenwand einer Schublade, befindet.

## Claims

1. Damping device for braking moveable masses (4), e.g. furniture drawers, furniture doors, furniture flaps or the like, with an oblong, sleeve-shaped or tubular damping housing (5), a damping element (8) made of a material with a resilient capacity and rolled up in the form of a spiral spring and arranged in the damping housing (5) and a damping tongue (1) which can be moved into and out of the damping housing and which, when inserted into the damping housing (5), acts against the damping element (8), **characterised in that** the damping tongue (1), when inserted into the damping housing (5), wholly or partly unrolls and at the same time elastically extends the damping element (8) rolled up in the form of a spring.

2. Damping device in accordance with claim 1, **characterised in that** the damping tongue (1) is in frictional contact with the roll-upable or extended damping element (8).

3. Damping device in accordance with claim 2, **characterised in that** the frictional engagement between the damping tongue (1) and the damping element (8) exerts a retaining force on the moveable mass (4) in its respective position, particularly in the braking position.

4. Damping device in accordance with claim 1 or any one of the claims following it, **characterised in that** in cross section the damping element (8) is constructed in the form of a flat strip.

5. Damping device in accordance with claims 1 to 3, **characterised in that** in cross section the damping element (8) is constructed circular.

6. Damping device in accordance with claims 1 to 3, **characterised in that** in cross-section the damping element (8) is constructed polygonal.

7. Damping device in accordance with claims 1 to 3, **characterised in that** in cross-section the damping element (8) is constructed rectangular with rounded off edges.

8. Damping device in accordance with claim 1 or any one of the claims following it, **characterised in that** during the extending operation the damping element (8) positively engages with the inner side of the damping housing (5) facing it.

9. Damping device in accordance with claim 1 or any one of the claims following it, **characterised in that** the damping element (8) is made of a polymer having resilient elastic properties, preferably a polyurethane plastic or a polyester elastomer plastic.

10. Damping device in accordance with claim 1 or any one of the claims following it, **characterised in that** the damping element (8) is made of a non-ageing, ozone-resistant, light-fast plastic which is also resistant to the oils and greases commonly encountered.

11. Damping device in accordance with claim 1 or any one of the claims following it, **characterised in that** the damping element (8) is made of a material with memory effect.

12. Damping device in accordance with claim 1 or any one of the claims following it, **characterised in that**, after the mass is braked in the end position during the damping operation, the damping element (8) is fully extended by the damping tongue (1) and, when extended, is arranged between the damping tongue (1) and the inner side of the damping housing (5) and, when the damping tongue (1) is withdrawn from the damping housing (5), automatically rolls itself up elastically into a spiral shape.

13. Damping device in accordance with claim 1 or any one of the claims following it, **characterised in that** at the end (7) by which the damping tongue (1) enters the damping housing (5) the damping tongue (1) tapers towards the front and is constructed with its front end face rounded off.

14. Damping device in accordance with claim 1 or any one of the claims following it, **characterised in that** the damping element (8) is joined at an end portion to the inner side of the housing (5) by adhesive bonding.

15. Damping device in accordance with claim 1 or any one of claims 2 to 13, **characterised in that** the damping element (8) is arranged and fastened by an end portion by means of screws or rivets.

16. Damping device in accordance with claim 1 or any one of claims 2 to 13, **characterised in that** the damping element (8) is arranged and fastened by an end portion in a recess or hole in the damping housing (5).

17. Damping device in accordance with claim 1 or any one of the claims following it, **characterised in that** the damping housing (5) is fastened to one side of a piece of furniture (4), while the damping tongue (1) is fastened to the moveable mass (4), e.g. the side of a drawer.

## Revendications

1. Dispositif amortisseur servant à freiner des masses mobiles (4), par ex. des tiroirs de meubles, portes de meubles, volets de meubles ou assimilés, comprenant un boîtier amortisseur (5) oblong, en forme de douille ou de tube, un élément amortisseur (8) se composant d'un matériau à capacité de rappel élastique agencé dans le boîtier amortisseur (5), une languette amortisseuse (1) rentrant dans le boîtier (5) et en sortant qui, lorsqu'elle pénètre dans le boîtier (5), agit contre l'élément amortisseur (8), **caractérisé en ce que** lorsque la languette amortisseuse (1) plonge dans le boîtier (5), elle déroule partiellement ou entièrement l'élément amortisseur (8) enroulé à la façon d'un ressort en spirale, et l'étire comme un ressort élastique.

2. Dispositif amortisseur selon la revendication 1, **caractérisé en ce que** la languette amortisseuse (1) applique par adhérence de force contre l'élément amortisseur (8) enroulable ou étiré.

3. Dispositif amortisseur selon la revendication 2, **caractérisé en ce que** la jonction par adhérence des forces entre la languette amortisseuse (1) et l'élément amortisseur (8) exerce une force de retenue sur la masse mobile (4) dans la position respective, notamment en position finale de freinage.

4. Dispositif amortisseur selon la revendication 1 ou l'une des revendications suivantes, **caractérisé en ce que** l'élément amortisseur (8) présente une section du type de celle d'un ruban plat.

5. Dispositif amortisseur selon les revendications 1 à 3, **caractérisé en ce que** l'élément amortisseur (8) présente une section ronde.

6. Dispositif amortisseur selon les revendications 1 à 3, **caractérisé en ce que** l'élément amortisseur (8) présente une section polygonale.

7. Dispositif amortisseur selon les revendications 1 à 3; **caractérisé en ce que** l'élément amortisseur (8) présente une section rectangulaire à arêtes arrondies.

8. Dispositif amortisseur selon la revendication 1 ou l'une des revendications suivantes, **caractérisé en ce que** l'élément amortisseur (8), pendant la séquence d'étirage, s'applique par adhérence de formes contre la paroi intérieure le regardant du boîtier amortisseur (5).

9. Dispositif amortisseur selon la revendication 1 ou l'une des revendications suivantes, **caractérisé en ce que** l'élément amortisseur (8) se compose d'un polymère présentant les propriétés élastiques d'un ressort, préférentiellement d'une matière synthétique à base de polyuréthane ou d'une matière synthétique à base d'élastomère - polymère

10. Dispositif amortisseur selon la revendication 1 ou l'une des revendications suivantes, **caractérisé en ce que** l'élément amortisseur (8) se compose d'une matière synthétique résistante au vieillissement, à l'ozone et inaltérable à la lumière, mais offrant aussi une résistance envers les huiles et graisses habituellement rencontrées.

11. Dispositif amortisseur selon la revendication 1 ou l'une des revendications suivantes, **caractérisé en ce que** l'élément amortisseur (8) se compose d'un matériau à effet mémoire.

12. Dispositif amortisseur selon la revendication 1 ou l'une des revendications suivantes, **caractérisé en ce que** après le freinage de la masse jusque sur la position finale caractérisant la séquence d'amortissement, l'élément amortisseur (8) se retrouve complètement étiré sous l'action de la languette amortisseuse (1) et agencé entièrement étiré entre la languette amortisseuse (1) et la paroi intérieure du boîtier amortisseur (5) et que, lorsqu'on tire la languette (1) hors du boîtier (5), il se réenroule automatiquement et élastiquement, comme un ressort, pour retrouver sa forme de spirale.

13. Dispositif amortisseur selon la revendication 1 ou l'une des revendications suivantes, **caractérisé en ce que** l'extrémité (7) de la languette amortisseuse (1) pénétrant dans le boîtier amortisseur (5) se rétrécit de façon conique en direction avant, et que la face frontale avant est configurée arrondie.

14. Dispositif amortisseur selon la revendication 1 ou l'une des revendications suivantes, **caractérisé en ce qu'**un segment terminal de l'élément amortisseur (8) est relié par collage avec la paroi intérieure du boîtier (5).

15. Dispositif amortisseur selon la revendication 1 ou l'une des revendications 2 à 13, **caractérisé en ce que** l'élément amortisseur (8) est relié avec un segment terminal par des vis ou rivets.

16. Dispositif amortisseur selon l'une la revendication 1 ou l'une des revendications 2 à 13, **caractérisé en ce qu'**un segment terminal de l'élément amortisseur (8) est agencé et fixé dans un évidement ou une perforation ménagé(e) dans le boîtier amortisseur (5).

17. Dispositif amortisseur selon la revendication 1 ou l'une des revendications suivantes, **caractérisé en ce que** le boîtier amortisseur (5) est fixé contre une paroi d'un meuble (4) tandis que la languette amortisseuse (1) se trouve contre la masse mobile (4), p. ex. contre la paroi latérale d'un tiroir.
